Europäisches Patentamt

European Patent Office

Office européen des brevets

(11) Veröffentlichungsnummer: **0 421 189 B1**

## EUROPÄISCHE PATENTSCHRIFT

(45) Veröffentlichungstag der Patentschrift: **20.04.94**

(21) Anmeldenummer: **90118006.7**

(22) Anmeldetag: **19.09.90**

(51) Int. Cl.⁵: **C01G 49/00**, G11B 5/706

54 **Verfahren zur Herstellung von feinteiligem pulverförmigen hexagonalem Ferrit und seine Verwendung zur Herstellung von magnetischen Aufzeichnungsträgern.**

(30) Priorität: **28.09.89 DE 3932389**

(43) Veröffentlichungstag der Anmeldung:
**10.04.91 Patentblatt 91/15**

(45) Bekanntmachung des Hinweises auf die Patenterteilung:
**20.04.94 Patentblatt 94/16**

(84) Benannte Vertragsstaaten:
**DE FR GB NL**

(56) Entgegenhaltungen:
**EP-A- 0 123 445**
**EP-A- 0 141 558**
**EP-A- 0 150 580**
**EP-A- 0 220 586**

(73) Patentinhaber: **BASF Aktiengesellschaft**
**Carl-Bosch-Strasse 38**
**D-67063 Ludwigshafen(DE)**

(72) Erfinder: **Mueller, Michael Wolfgang, Dr.**
**Neurott 56**
**D-6831 Plankstadt(DE)**
Erfinder: **Schwab, Ekkehard, Dr.**
**Berwartsteinstrasse 4**
**D-6730 Neustadt(DE)**
Erfinder: **Arndt, Volker, Dr.**
**Koenigsberger Strasse 1**
**D-6712 Bobenheim-Roxheim(DE)**

EP 0 421 189 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 421 189 B1

## Beschreibung

Die Erfindung betrifft ein Verfahren zur Herstellung von feinteiligem pulverförmigem hexagonalem Ferrit durch Autoklavenbehandlung einer wäßrigen alkalischen, die den Ferrit bildenden Metallionen enthaltenden Suspension, bei einer Temperatur von 250 bis 330°C und anschließendes Tempern des dabei entstehenden Materials bei einer Temperatur von nicht mehr als 900°C sowie seine Verwendung zur Herstellung von magnetischen Aufzeichnungsträgern.

Die Herstellung von hexagonalen Ferriten in feinteiliger Pulverform durch eine Autoklavenbehandlung, der sogenannten hydrothermalen Synthese, ist bekannt. Beispielhaft seien nur die Verfahren angeführt, wie sie in den europäischen Patentanmeldungen 123 445, 141 558 und 161 767 offenbart sind. Nachteilig an den bekannten Verfahren ist jedoch eine nicht zufriedenstellende Raum-Zeit-Ausbeute.

Aufgabe der vorliegenden Erfindung war es daher, die bekannte hydrothermale Ferrit-Synthese so zu modifizieren, daß eine Erhöhung der Raum-Zeit-Ausbeute möglich wird.

Es wurde nun gefunden, daß mit einem Verfahren zur Herstellung von feinteiligem pulverförmigem hexagonalem Ferrit durch Autoklavenbehandlung einer wäßrigen alkalischen, die den Ferrit bildenden Metallionen enthaltenden Suspension bei einer Temperatur von 250 bis 330°C und anschließendes Tempern des dabei entstehenden Materials bei einer Temperatur von nicht mehr als 900°C, die gestellte Aufgabe gelöst werden kann, wenn die Salze der den Ferrit bildenden Metallionen zuerst in ihrem Kristallwasser aufgeschmolzen, diese geschmolzene Mischung dann zur wäßrigen Lauge gegeben und schließlich die dabei entstehende Suspension der Autoklavenbehandlung unterzogen wird.

Zur Durchführung des erfindungsgemäßen Verfahrens werden die hexagonalen Ferrite, üblicherweise einen modifizierten Barium-, Strontium- oder Bleiferrit, bildenden Metallionen in Form ihrer Kristallwasser enthaltenden Salze, wie z.B. $Fe(NO_3)_3 \cdot 9\,H_2O$, $SnCl_4 \cdot 5\,H_2O$, $Co(NO_3)_2 \cdot 6\,H_2O$, $Ba(OH)_2 \cdot 8\,H_2O$, $K_2SnO_3 \cdot 3\,H_2O$ eingesetzt. Diese Salze werden in den für den vorgesehenen Ferrit nötigen Anteilen mechanisch vermischt und diese Mischung dann so erhitzt, daß sich eine weitgehend homogene Salzschmelze bildet. Diese Salzschmelze weist den speziellen Vorteil auf, daß eine konzentrierte und dennoch weitgehend homogene Mischung der für die Ferritzusammensetzung erforderlichen Salze erreicht wird. In einer besonders zweckmäßigen Ausgestaltung enthält die Schmelze die für die Ferritbildung notwendigen Eisenionen in einer Konzentration von mindestens 3 Mol/l, insbesondere von 4 bis 15 Mol/l.

Anschließend wird diese Salzschmelze zu der wäßrigen Lauge, üblicherweise Natriumhydroxid, gegeben. Das Auflösen des Alkali- oder Erdalkalihydroxids sollte dabei zweckmäßigerweise in einer sehr geringen Wassermenge erfolgen, wobei Laugenkonzentrationen von mindestens 8 Mol/l besonders vorteilhaft sind. Nach dem Mischen der Salzschmelze mit der Lauge wird die resultierende Suspension, der bekannten Autoklavenbehandlung bei Temperaturen von 250 bis 330°C unterzogen. Das dabei entstehende Produkt wird anschließend abfiltriert, gewaschen, getrocknet und bei einer 900°C nicht übersteigenden Temperatur getempert. Durch diese Temperbehandlung wird aus dem bei der Hydrothermalsynthese entstandenen ferritischen Vorprodukt der feinteilige, gut kristallisierte hexagonale Ferrit mit einer mittleren Teilchengröße zwischen 0,01 bis 0,3 $\mu$m und den bekannt vorteilhaften Eigenschaften für die Verwendung in magnetischen Aufzeichnungsträgern.

Durch die erfindungsgemäße Modifizierung der bekannten Hydrothermalsynthese wird es möglich die Raum-Zeit-Ausbeute dieser Reaktion um mindestens das 3fache gegenüber der bekannten Verfahrensführung zu steigern und bis zu 26 g pro Liter und Stunde zu erreichen. Ein weiterer Vorteil des erfindungsgemäßen Verfahrens besteht darin, daß die Koerzitivfeldstärken der resultierenden hexagonalen Ferrite, insbesondere der Bariumferrite, im Vergleich zu den nach den bekannten Verfahren erhaltenen Produkten erniedrigt wird. Diese Ferrite mit niedriger Koerzitivfeldstärke weisen dennoch die gerade bei ihrer Verwendung als magnetisierbares Material für magnetische Aufzeichnungsträger sehr wichtige hohe Feinteiligkeit auf.

Die Erfindung sei anhand folgender Beispiele im Vergleich zu Versuchen nach dem Stand der Technik näher erläutert. An dem jeweils resultierenden Ferritmaterialien wurden die magnetischen Eigenschaften mittels eines Schwingmagnetometers in einem Meßfeld von 400 kA/m bestimmt und zwar die Koerzitivfeldstärke $H_c$ in (kA/m) und die Sättigungsmagnetisierung $M_m$ in [$nTm^3/g$]. Außerdem wurde die spezifische Oberfläche SSA in [$m^2/g$] nach BET gemäß DIN 66 132 mittels eines Ströhlein-Areameters der Fa. Ströhlein Düsseldorf, BRD, nach dem Einpunkt-Differenz-Verfahren nach Haul und Dümbgen bestimmt.

2

Beispiel 1

3,46 Mol $Fe(NO_3)_3 \cdot 9\ H_2O$, 0,305 Mol $SnCl_4 \cdot 5\ H_2O$, 0,305 Mol $Co(NO_3)_2 \cdot 6\ H_2O$ und 0,41 Mol $Ba(OH)_2 \cdot 8\ H_2O$ wurden unter Rühren und unter Erhitzen auf 50°C zum Schmelzen gebracht. Diese Schmelze wurde sodann unter Rühren bei 10°C zu einer Lösung aus 19,5 Mol NaOH in 2037 ml Wasser gegeben. Die so erhaltene Suspension wurde im ungerührten Autoklaven innerhalb von 5 h auf 250°C erhitzt und 5 h bei dieser Temperatur gehalten. Nach dem Abkühlen wurde filtriert, gewaschen, getrocknet und anschließend 1 h bei 800°C getempert. Die Eigenschaften des so hergestellten Bariumferrits sind in der Tabelle 1 angegeben.

Es wurden pro Liter der Autoklavenkühlung 112,5 g Bariumferrit erhalten, was einer Raum-Zeit-Ausbeute (RZA) von 7,5 g/l/h entspricht.

Beispiel 2

Es wurde wie in Beispiel 1 beschrieben verfahren, jedoch wurde der Temperschritt bei 850°C durchgeführt. Die Meßergebnisse sind in der Tabelle 1 angegeben.

Beispiel 3

0,255 Mol $Fe(NO_3)_3 \cdot 9\ H_2O$, 0,0225 Mol $SnCl_4 \cdot 5\ H_2O$, 0,0225 Mol $Co(NO_3)_3 \cdot 6\ H_2O$ und 0,030 Mol $Ba(OH)_2 \cdot 8\ H_2O$ wurden unter Rühren und unter Erhitzen auf 50°C zum Schmelzen gebracht. Diese Schmelze wurde sodann unter Rühren bei 10°C zu einer Lösung aus 1,0575 Mol NaOH und 50 ml Wasser gegeben. Die so erhaltene Suspension wurde im ungerührten Autoklaven innerhalb von 2,5 h auf 250°C erhitzt und bei dieser Temperatur 5 h lang gehalten. Nach dem Abkühlen wurde filtriert, gewaschen, getrocknet und anschließend 1 h bei 800°C getempert. Die Eigenschaften des so hergestellten Bariumferrits sind in der Tabelle 1 angegeben.

Es wurde eine Volumenausbeute von 322 g/l erreicht, was einer RZA von 26 g/l/h entspricht.

Vergleichsversuch 1

2,27 Mol $Fe(NO_3)_3 \cdot 9\ H_2O$, 0,2 Mol $SnCl_4 \cdot 5\ H_2O$, 0,20 Mol $Co(NO_3)_3 \cdot 6\ H_2O$ und 0,255 Mol $Ba(OH)_2 \cdot 8\ H_2O$ wurden unter Rühren in 2,27 l $H_2O$ gelöst und bei 10°C zu einer Lösung aus 17,3 Mol NaOH in 2,27 l $H_2O$ gegeben. Die so erhaltene Suspension wurde im ungerührten Autoklaven innerhalb von 5 h auf 250°C erhitzt und bei dieser Temperatur 5 h gehalten. Nach dem Abkühlen wurde filtriert, gewaschen, getrocknet und anschließend 1 h bei 800°C getempert. Die Eigenschaften des so hergestellten Bariumferrits sind in der Tabelle 1 angegeben.

Es wurde eine Volumenausbeute von 48 g/l erreicht, was einer RZA von 3,2 g/l/h entspricht.

Vergleichsversuch 2

0,045 Mol $Fe(NO_3)_3 \cdot 9\ H_2O$, 0,004 Mol $SnCl_4 \cdot 5\ H_2O$, 0,004 Mol $Co(NO_3)_3 \cdot 6\ H_2O$ und 0,0039 Mol $Ba(OH)_2 \cdot 8\ H_2O$ wurden unter Rühren in 45 ml $H_2O$ gelöst und bei 10°C zu einer Lösung aus 0,45 Mol NaOH in 45 cm$^3$ $H_2O$ gegeben. Die so erhaltene Suspension wurde im ungerührten Autoklaven innerhalb von 2,5 h auf 250°C erhitzt und bei dieser Temperatur 3 h gehalten. Nach dem Abkühlen wurde filtriert, gewaschen, getrocknet und anschließend 1 h bei 800°C getempert. Die Eigenschaften des so hergestellten Bariumferrits sind in der Tabelle 1 angegeben.

Es wurde eine Volumenausbeute von 43,8 g/l erreicht, was einer RZA von 2,5 g/l/h entspricht.

Vergleichsversuch 3

2,27 Mol $Fe(NO_3)_3 \cdot 9\ H_2O$, 0,2 Mol $SnCl_4 \cdot 5\ H_2O$, 0,2 Mol $Co(NO_3)_3 \cdot 6\ H_2O$ und 0,2 Mol $Ba(OH)_2 \cdot 8\ H_2O$ wurden unter Rühren in 2,27 l $H_2O$ gelöst und bei 10°C zu einer Lösung aus 22,7 Mol NaOH in 2,27 l $H_2O$ gegeben. Die so erhaltene Suspension wurde im ungerührten Autoklaven innerhalb von 7,5 h auf 250°C erhitzt und bei dieser Temperatur 10 h gehalten. Nach dem Abkühlen wurde filtriert, gewaschen, getrocknet und anschließend 1 h bei 800°C getempert. Die Eigenschaften des so hergestellten Bariumferrits sind in der Tabelle 1 angegeben.

Es wurde eine Volumenausbeute von 38 g/l erreicht, was einer RZA von 1,7 g/l/h entspricht.

Tabelle 1

| | $Fe^{3+}$-Konz.* [mol/l] | Aufheiz-zeit [h] | Temp. kostanz [h] | Abkühl-zeit [h] | Volumenaus-beute [g/l] | RZA [g/l/h] | $H_C$ [kA/m] | $M_m$ [nTm³/g] | SSA [m²/g] |
|---|---|---|---|---|---|---|---|---|---|
| Beispiel 1 | 4,9 | 5 | 5 | 5 | 112,5 | 7,5 | 53 | 60 | 48 |
| Beispiel 2 | 4,9 | 5 | 5 | 5 | 112,5 | 7,5 | 44 | 58 | 42 |
| Beispiel 3 | 12,4 | 2,5 | 5 | 5 | 322 | 26 | 24 | 59 | 50 |
| Vergl.Vers. 1 | 0,87 | 5 | 5 | 5 | 48 | 3,2 | 61 | 60 | 46 |
| Vergl.Vers. 2 | 0,87 | 2,5 | 3 | 5 | 43 | 2,5 | 79 | 66 | 42 |
| Vergl.Vers. 3 | 0,87 | 7,5 | 10 | 5 | 38 | 1,7 | 76 | 66 | 30 |

* in der Schmelze

Beispiel B1

In einer 250 Volumenteile fassenden und mit 100 Volumenteilen Glaskugeln mit einem Durchmesser von 1 mm bis 1,5 mm gefüllten Mühle werden 60 Teile des gemäß Beispiel 1 erhaltenen Bariumferritpigments zusammen mit 3,6 Teilen eines kugelförmigen $Al_2O_3$-Pulvers mit einem mittleren Teilchendurchmesser von 0,3 $\mu$m in einer Mischung bestehend aus 16,5 Teilen einer 13 %igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan, 9,2 Teilen einer 20 %igen Lösung eines Copolymers aus Vinylchlorid, Dimethylmaleinat und Diethylmaleinat in einem Gemisch aus gleichen Teilen Tetrahydrofuran und Dioxan, weiteren 41 Teilen Tetrahydrofuran und Dioxan, und 2,7 Teilen eines Phosporsäureesters gemischt und 4 Stunden dispergiert. Danach wurden noch einmal 26,4 Teile der genannten 13 %igen Polyesterurethanlösung, 14,8 Teile der genannten 20 %igen Vinylchlorid-Copolymerlösung, 10,3 Teile des genannten Lösungsmittelgemischs aus gleichen Teilen Tetrahydrofuran und Dioxan, sowie 0,6 Teile Isostearinsäure, 0,12 Teile Isobutylstearat und 0,06 Teile eines handelsüblichen Silikonöls zugefügt und weitere 30 Minuten dispergiert. Anschließend wurde die Dispersion filtriert und auf einer üblichen Beschichtungsmaschine mittels eines Linealgießers auf eine Polyethylenterephthalatfolie in einer solchen Dicke aufgebracht, daß sich nach dem Trocknen und Kalandrieren eine Trockenschichtdicke von 4,5 $\mu$m ergab.

Die an den Bandproben gemessenen magnetischen Eigenschaften, die Koerzitivfeldstärke $H_c$ in [kA/m], die remanente Magnetisierung $M_r$ in [mT] sowie die relative Remanenz $M_r/M_s$, der Richtfaktor Rf, das Verhältnis der Remanenz längs zu der quer zur Orientierung und die Schaltfeldstärkenverteilung SFD nach Williams und Comstock (AIP Conf. Proc. 5 (1971), 738) sind in der Tabelle 2 angegeben.

Vergleichsversuch BV 1

Die Verarbeitung des Ferrits nach Vergleichsversuch 1 erfolgte unter den gleichen Bedingungen wie in Beispiel B1 beschrieben. Die an den Bandproben gemessenen magnetischen Eigenschaften sind in der Tabelle 2 angegeben.

Tabelle 2

|  | $H_c$ | $M_r$ | $M_r/M_s$ | Rf | SFD |
|---|---|---|---|---|---|
| Beispiel B1 | 67 | 81 | 0,71 | 2,6 | 0,10 |
| Vergl. Vers. BV1 | 76 | 82 | 0,70 | 2,6 | 0,10 |

**Patentansprüche**

1. Verfahren zur Herstellung von feinteiligem pulverförmigem hexagonalem Ferrit durch Autoklavenbehandlung einer wäßrigen alkalischen, die den Ferrit bildenden Metallionen enthaltenden Suspension, bei einer Temperatur von 250 bis 330°C und anschließendes Tempern des dabei entstehenden Materials bei einer Temperatur von nicht mehr als 900°C, dadurch gekennzeichnet, daß die Salze der den Ferrit bildenden Metallionen zuerst in ihrem Kristallwasser aufgeschmolzen, diese geschmolzene Mischung dann zur wäßrigen Lauge gegeben und schließlich die dabei entstehende Suspension der Autoklavenbehandlung unterzogen wird.

2. Verfahren gemäß Anspruch 1, dadurch gekennzeichnet, daß die Suspension mindestens 3 Mol Eisenionen pro Liter enthält.

3. Verwendung des gemäß Anspruch 1 erhaltenen feinteiligen pulverförmigen hexagonalen Ferrits zur Herstellung von magnetischen Aufzeichnungsträgern.

**Claims**

1. A process for the preparation of finely divided hexagonal ferrite powder by treating an aqueous alkaline suspension containing the ferrite-forming metal ions in an autoclave at from 250 to 330°C and then heating the resulting material at not more than 900°C, wherein the salts of the ferrite-forming metal ions are first melted in their water of crystallization, this molten mixture is then added to the aqueous alkali and finally the resulting suspension is subjected to the treatment in the autoclave.

2. A process as claimed in claim 1, wherein the suspension contains at least 3 mol of iron ions per liter.

3. Use of a finely divided hexagonal ferrite powder obtained as claimed in claim 1 for the production of magnetic recording media.

**Revendications**

1. Procédé de préparation de ferrite hexagonal pulvérulent par traitement en autoclave d'une suspension contenant les ions métalliques formant le ferrite, à une température de 210 à 330 °C et recuit ensuite de la matière obtenue à une température non supérieure à 900 °C, caractérisé par le fait que les sels des ions métalliques formant le ferrite sont d'abord fondus dans leur eau de cristallisation, ce mélange fondu est fourni ensuite à une lessive aqueuse et enfin la suspension ainsi obtenue est soumise au traitement en autoclave.

2. Procédé selon la revendication 1, caractérisé par le fait que la suspension contient au moins 3 mol d'ions fer par litre.

3. Utilisation du ferrite hexagonal pulvérulent finement divisé, obtenu selon la revendication 1 pour la fabrication de supports d'enregistrement magnétiques.